# EUROPEAN PATENT SPECIFICATION

(11) **EP 3 096 442 B1**
(45) Date of publication and mention of the grant of the patent: **12.06.2019**
(21) Application number: 16167462.7
(22) Date of filing: 28.04.2016
(51) Int. Cl.: H02K 3/30, H01B 3/02, H01B 3/18

(54) **DYNAMO-ELECTRIC MACHINE**
DYNAMOELEKTRISCHE MASCHINE
MACHINE DYNAMO-ÉLECTRIQUE

(30) Priority: 19.05.2015 JP 2015101493
(43) Date of publication of application: 23.11.2016
(73) Proprietor: Hitachi, Ltd., Tokyo 100-8280 (JP)
(72) Inventor: YOSHITAKE, Yuichiro, Tokyo, 100-8280 (JP); IKEDA, Kenji, Tokyo, 100-8280 (JP); IWAKI, Genzo, Tokyo, 100-8280 (JP); KATO, Tetsuji, Tokyo, 100-8280 (JP)
(74) Representative: MERH-IP Matias Erny Reichl Hoffmann Patentanwälte PartG mbB

(56) References cited:
- JP-A- H08 191 559
- JP-A- 2004 297 976
- US-A- 4 694 268

## Description

### BACKGROUND

The present invention relates to a dynamo-electric machine having a stator or a rotor.

It is obvious that the energy demand in the whole world will increase in the future because of the increase of the world population and the exponential growth of industry in the emerging nations. The global energy consumption in 2035 is estimated to increase about one and half times as large as that in 2010.

Against this background, in recent years, attention is focused on highly effective recovery methods of petroleum and natural gas, and a recovery rate is expected to increase twice by a CO₂ injection method that is one of the dominant methods.

This is a method of injecting water or gas into a petroleum or wet gas reservoir in the ground, and makes it easy to extract crude petroleum remaining in the ground even in the case of a depleted well field that has been in operation for a long time. In order to mine in a depleted well field, a pump and a compressor operable in such an environment are required.

As items required of a dynamo-electric machine operating at a depleted well field in a depth of 1,000 m or more, a high insulation property of 1 kV or higher in rated voltage, heat resistance performance of 170 °C or higher in environmental temperature, and stress resistance performance withstanding the vibration generated deep in the ground or the high-speed rotation of a motor are indispensable.

In the present situation, a motor for a compressor aimed at such a depleted well field in a depth of 1,000 m or more has not yet been put in commercial application. Or, the device has to be changed in as short a time as about three years.

Japanese Unexamined Patent Application Publications No. Hei 2(1990)-261038 and No. Hei 4(1992)-251548, for example, describe an insulation section of a dynamo-electric machine. Both of the patent literatures are related to a motor that uses an inorganic substance at an insulation section and is aimed at space aeronautics. Japanese Unexamined Patent Application Publication No. Hei2 (1990)-261038, in particular, is related to an insulating method of a stator coil of a dynamo-electric machine formed by inserting the winding wire of an inorganic insulation coil into the slot of the stator core, forming a ceramic layer by impregnating an inorganic impregnating agent, and impregnating fluororesin. JP H08 191559 A discloses a wound coil, which is constituted by a conducting wire that is wrapped with a first insulating material. The coil is provided in a coil groove and embedded in an epoxy resin as insulating material. A coil, which is wrapped by two insulating layers, is further disclosed in JP 2004 297976 A.

### SUMMARY

By the above known methods, however, all of organic components volatilize at the time of calcination for sintering an insulant and finally an insulation section includes only an inorganic substance. The configuration is thought to be suitable for the application to space aeronautics or the like because a motor is not required to rotate at a high speed and vibration is not generated, but there is room for improvement in the aspect of mechanical properties when the system is used as it is for a motor of a depleted well field, for example.

Concretely, when insulation between a coil and a core is formed only with an inorganic substance (because an inorganic substance has a porous structure), cracks and exfoliation tend to be generated. As a result, a coil and a slot core cannot be positioned and the performance deteriorates.

An object of the present invention is to provide a dynamo-electric machine allowing high-voltage resistance, high-heat resistance, and stress resistance to improve.

To solve the aforementioned problem, a dynamo-electric machine having the features defined in claim 1 is provided. Further preferred embodiments are defined in the dependent claims.

The present invention makes it possible to provide a dynamo-electric machine allowing high-voltage resistance, high-heat resistance, and stress resistance to improve.

### BRIEF DESCRIPTION OF THE DRAWINGS

Fig. 1 shows a stator or a rotor of a dynamo-electric machine according to a first embodiment;
Fig. 2 shows a unit sectional view of an electric power converter according to a second embodiment; and
Fig. 3 shows a unit sectional view of an electric power converter according to a third embodiment (which is helpful for understanding the present invention).

### DETAILED DESCRIPTION

A concrete example of a stator (or a rotor) of a dynamo-electric machine according to an embodiment for carrying out the present invention (hereunder referred to as "the present embodiment" appropriately) is hereunder explained in detail in reference to drawings. However, the present embodiment is not limited to the following contents and can be changed arbitrarily in the range not deviating from the tenor. The example shown below tries to attain all of high-voltage resistance, high-heat resistance, and stress resistance by taking the temperature distribution of a motor into consideration and using both an organic substance and an inorganic substance (generally can withstand a high temperature more than an organic substance). Such a dynamo-electric machine can be used as a harsh environment responsive motor suitable for a depleted well field and the like. Further, as more concrete application for example, it is conceivable to make mechanical characteristics comparable to a standard motor while an inorganic substance is applied to the major part of an insulation system in order to attain both drive rated at 3 kV and operation at an environmental temperature of 170 °C or higher. An insulation life of not less than 20 years can be expected to be secured even under such conditions. Furthermore, stress resistance comparable to an ordinary organic insulation motor can be expected. As a result, application to a depleted well field deeper than 1,000 m is expected.

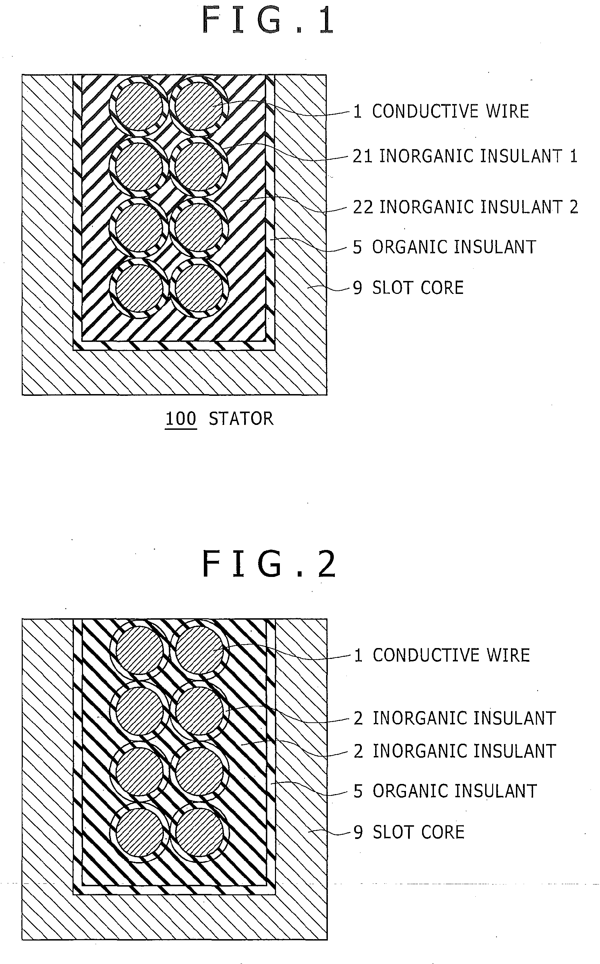

Fig. 1 is a view showing a stator of a dynamo-electric machine according to an embodiment. As shown in Fig. 1, the stator mainly includes a conductive wire 1, two or more kinds of inorganic insulants 21 and 22, an organic insulant 5, a slot core 9, and others. The dynamo-electric machine has a rotor and a stator facing it and the rotor rotates with respect to the stator. Although an example of applying to a stator is shown in Fig. 1, it is also possible to apply to a rotor.

In the stator, since a high voltage is applied to the part of the conductive wire 1, the conductive wire 1 has to be electrically insulated from the slot core 9. Epoxy resin, unsaturated polyester, or the like is used as the insulant in an ordinary dynamo-electric machine, but the service temperature limit of such an organic substance is about 240 °C or lower. It is excellent in electrical insulation however and the rated voltage can be set at tens of kilovolts.

Meanwhile, in special application such as space aeronautics where the environmental temperature exceeds 240 °C, such an organic insulant considerably degrades, degenerates, and burns down and hence an inorganic insulant is used. In general, however, an inorganic substance has a porous structure, hence tends to generate voids and the like, and electrically degrades by partial discharge under a high voltage of 1 kV or higher. To cope with this, the present invention intends to obtain both high-heat resistance and high-voltage resistance.

Firstly, with regard to a conductor 1 in the present embodiment, a Ni-plated copper wire or a Ni wire itself is applied in order to prevent the oxidation under a high temperature"for example, but an arbitrary metal can be applied as long as it can prevent corrosion under a high temperature.

In the-insulation structure of the present embodiment, by using a dense inorganic insulant 21 so as not to generate voids around a conductor 1, partial discharge generated at a high electric field part in the vicinity of the conductor is inhibited. Consequently, a process of forming a dense inorganic insulation layer is required for an inorganic insulant.

Concretely, as an inorganic insulant 21, (fine) ceramics, glass, cement, mica, alumina, magnesia, and others are used. They may be used individually or may be used compositely in an arbitrary combination.

In the case of ceramics for example, a dense inorganic insulation layer without void can be formed by using a material system of BaO-Al₂O₃-SiO₂-Bi₂O₃ and stacking green sheets of several microns in layers.

Alternatively, an arbitrary method such as a tape forming method, an injection molding method, or an extrusion molding method can be applied as long as it is a manufacturing method allowing ceramics to be densified.

In the above case, a dense region increases as the thickness of an inorganic insulant (1) 21 on a conductor surface increases, and hence the manufacturing cost and manufacturing time increase to that extent. The thickness can be selected arbitrarily but desirably is about 0.1 to 3 mm in the case of a rated voltage of 3 kV and about 0.2 to 6 mm in the case of a rated voltage of 6 kV for example. The thickness is decided in balance with the configuration of an inorganic insulant (2) 22.

With regard to an inorganic insulant (2) 22 formed between an inorganic--insulant (1) 21 and a slot core, a material equivalent to the inorganic insulant (1) 21 or another material may be used. The density of the site may appropriately be equal to or less than that of the inorganic insulant (1) 21 in consideration of the viewpoint of the manufacturing cost and processing time.

The reason is that, if the inorganic insulant (1) 21 can secure an above-stated thickness, increase the density in the region, and eliminate voids, it is possible to prevent the degradation of the whole insulation system or delay the degradation because the site where partial discharge is generated is the inorganic insulant (1) 21. That is, the inorganic insulant (1) 21 prevents discharge and hence the inorganic insulant (2) 22 may use a material having partial discharge resistance inferior to that of the inorganic insulant (1) 21.

A material used for the inorganic insulant (2) 22 may be any material as long as it is an inorganic insulant having high heat resistance and, for example, (fine) ceramics, glass, cement, mica, alumina, magnesia, and others are used.

A material used for an organic insulant 5 between the inorganic insulant (2) 22 and the slot core may also be any material and, examples include epoxy resin, unsaturated polyester, polyimide, and others. An organic substance is used because it is excellent in adhesiveness.

In particular, polyimide is one of the organic materials having the highest heat resistance and can be applied up to 250 °C to 300 °C in some material compositions. A mixture of silica and polyimide or the like is preferable. If mica or the like is contained, the partial discharge resistance improves further.

Although the present embodiment shows a configuration example of forming a complex insulation system by using an organic substance excellent in adhesiveness on the surface of a stator slot core and a dense inorganic substance on the surface of a coil, the present invention is not limited to the example and is applicable also to high temperature insulation of a rotor and a converter, for example.

It is desirable to apply a substance of high thermal conductivity to an organic insulant 5 on the slot core surface. It allows delaying the thermal degradation of the whole insulation system.

For example, if the thermal conductivity of epoxy resin used for an ordinary high-voltage rotary machine is about 0.2 W/mK and the environmental temperature on that occasion is 170 °C, the temperature of an organic insulant is likely to exceed 275 °C and deteriorate due to various kinds of heat generation in the interior of a motor and others .

If the thermal conductivity of an organic insulant improves to 0.6 W/mK or more, the temperature of the organic insulant decreases to 245 °C or lower, and the organic insulant 5 does not degenerate unlikely to deteriorate. Since the manufacturing process, the molding process, the manufacturing cost, and the like of a material increase in response to the improvement of thermal conductivity, about 0.6 W/mK is estimated to be appropriate, but any thermal conductivity is acceptable as long as it is 0.6 W/mK or more.

A second embodiment is shown in Fig. 2. In the present embodiment, the same inorganic insulant is used for both the inorganic insulant (1) 21 and the inorganic insulant (2) 22 as in the first embodiment. The inorganic insulant 21 is preferably dense as stated earlier, but the present embodiment can be adopted in the case of replacing in a short insulation service time or the like.

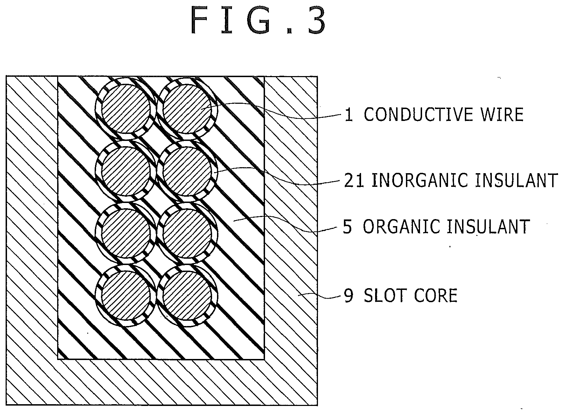

A third embodiment, which is helpful for understanding, but not covered by the scope of the independent claim is shown in Fig. 3. The present embodiment shows the case of applying an inorganic insulation layer 21 only on the surface of a conductive wire 1 and filling the whole space between the inorganic insulation layer 21 and a slot core with an organic substance 5. As a result, an inorganic insulant (2) 22 is unnecessary. If the thermal conductivity of the organic substance 5 is 2 W/mK or more, it is possible to suppress the temperature rise at the site of the organic substance 5 to 245 °C or lower in the present embodiment as well. The process of epoxy resin having formability at 2 W/mK is complicated, but the present embodiment may be adopted in some cases in consideration of the comprehensive process.

## Claims

1. A dynamo-electric machine having a stator (100) or a rotor including a wound coil formed by winding a conducting wire (1) that is wrapped in a first insulant (2, 21) which is mainly formed of an inorganic material, a slot core (9) containing the wound coil, a second insulant (2, 22) arranged around the wound coil and mainly formed of an inorganic material, and a third insulant (5) arranged between the second insulant (2, 22) and the core (9) and mainly formed of an organic material, wherein the third insulant (5) includes a mixture of silica and polyimide.

2. The dynamo-electric machine according to Claim 1, wherein the first insulant (2, 21) has a density higher than a density of the second insulant (2, 22).

3. The dynamo-electric machine according to Claim 2, wherein the first insulant includes (2, 21) any one of ceramics, glass, cement, mica, alumina, and magnesia or a combination of those.

4. The dynamo-electric machine according to Claim 2 or 3, wherein the thickness of the first insulant (2, 21) is 0.1 mm or more to 6 mm or less.

5. The dynamo-electric machine according to Claim 1, wherein the third insulant (5) includes mica.

6. The dynamo-electric machine according to any one of Claims 1 to 8, wherein the thermal conductivity of the third insulant (5) is 0.6 W/mK or more.

7. The dynamo-electric machine according to Claim 6, wherein the thermal conductivity of the third insulant (5) is 2 W/mK or more.

## Patentansprüche

1. Dynamoelektrische Maschine, die einen Stator (100) oder einen Rotor besitzt, der eine gewickelte Spule, die durch Wickeln eines leitenden Drahtes (1), der von einem ersten Isoliermaterial (2, 21), das hauptsächlich aus einem anorganischen Material gebildet ist, umwickelt ist, gebildet ist, einen Schlitzkern (9), der die gewickelte Spule enthält, ein zweites Isoliermaterial (2, 22), das um die gewickelte Spule angeordnet ist und hauptsächlich aus einem anorganischen Material gebildet ist, und ein drittes Isoliermaterial (5), das zwischen dem zweiten Isoliermaterial (2, 22) und dem Kern (9) angeordnet ist und hauptsächlich aus einem organischen Material gebildet ist, enthält, wobei das dritte Isoliermaterial (5) eine Mischung aus Kieselsäure und Polyimid enthält.

2. Dynamoelektrische Maschine nach Anspruch 1, wobei das erste Isoliermaterial (2, 21) eine Dichte besitzt, die höher als eine Dichte des zweiten Isoliermaterials (2, 22) ist.

3. Dynamoelektrische Maschine nach Anspruch 2, wobei das erste Isoliermaterial (2, 21) Keramik, Glas, Zement, Glimmer, Aluminiumoxid und/oder Magnesia enthält.

4. Dynamoelektrische Maschine nach Anspruch 2 oder 3, wobei die Dicke des ersten Isoliermaterials (2, 21) 0,1 mm oder mehr bis 6 mm oder weniger beträgt.

5. Dynamoelektrische Maschine nach Anspruch 1, wobei das dritte Isoliermaterial (5) Glimmer enthält.

6. Dynamoelektrische Maschine nach einem der Ansprüche 1 bis 8, wobei die Wärmeleitfähigkeit des dritten Isoliermaterials (5) 0,6 W/mK oder mehr ist.

7. Dynamoelektrische Maschine nach Anspruch 6, wobei die Wärmeleitfähigkeit des dritten Isoliermaterials (5) 2 W/mK oder mehr ist.

## Revendications

1. Machine dynamoélectrique ayant un stator (100) ou un rotor incluant une bobine enroulée formée en enroulant un fil conducteur (1) qui est enveloppé dans un premier isolant (2, 21) qui est principalement formé avec un matériau inorganique, un noyau fendu (9) qui contient la bobine enroulée, un second isolant (2, 22) agencé autour de la bobine enroulée et principalement formé d'un matériau inorganique, et un troisième isolant (5) agencé entre le second isolant (2, 22) et le noyau (9) et principalement formé d'un matériau organique, dans lequel le troisième isolant (5) inclut un mélange de silice et de polyimide.

2. Machine dynamoélectrique selon la revendication 1, dans laquelle le premier isolant (2, 21) a une densité plus élevée qu'une densité du second isolant (2, 22).

3. Machine dynamoélectrique selon la revendication 2, dans laquelle le premier isolant (2, 21) inclut l'une quelconque des matières suivantes : céramique, verre, ciment, mica, alumine et magnésie, ou une combinaison de celles-ci.

4. Machine dynamoélectrique selon la revendication 2 ou 3, dans laquelle l'épaisseur du premier isolant (2, 21) est de 0,1 mm ou plus jusqu'à 6 mm ou moins.

5. Machine dynamoélectrique selon la revendication 1, dans laquelle le troisième isolant (5) inclut du mica.

6. Machine dynamoélectrique selon l'une quelconque des revendications 1 à 8, dans laquelle la conductivité thermique du troisième isolant (5) est 0,6 W/mK ou plus.

7. Machine dynamoélectrique selon la revendication 6, dans laquelle la conductivité thermique du troisième isolant (5) est 2 W/mK ou plus.
